# EUROPÄISCHE PATENTSCHRIFT

(11) **EP 3 460 078 B1**
(45) Veröffentlichungstag und Bekanntmachung des Hinweises auf die Patenterteilung: **10.11.2021**
(21) Anmeldenummer: 18193739.2
(22) Anmeldetag: 11.09.2018
(51) Int. Cl.: C21D 6/02, C21D 7/06, C21D 8/10, C22C 38/02, C22C 38/04, C22C 38/12, C22C 38/18, C22C 38/22, C22C 38/24, C22C 38/38, C22C 38/60, F16L 19/028, F16L 19/025, F16L 43/00

(54) **VERBINDERTEIL MIT METALLISCHEM GRUNDKÖRPER ZUM VERSCHRAUBEN VON ROHREN UND VERFAHREN ZU DESSEN HERSTELLUNG**
CONNECTOR PART COMPRISING A METALLIC BASE BODY INTENDED TO ALLOW THE SCREWING OF TUBES, AND METHOD FOR ITS PREPARATION
PIÈCE DE RACCORDEMENT À UN CORPS DE BASE MÉTALLIQUE DESTINÉE À VISSER DES TUYAUX ET SON PROCÉDÉ DE FABRICATION

(30) Priorität: 26.09.2017 DE 102017122258
(43) Veröffentlichungstag der Anmeldung: 27.03.2019
(73) Patentinhaber: VOSS Fluid GmbH, 51688 Wipperfürth (DE)
(72) Erfinder: POTT, Harald, 42499 Hückeswagen (DE); LE, Detlef, 51688 Wipperfürth (DE)
(74) Vertreter: Dr. Solf & Zapf Patent- und Rechtsanwalts PartG mbB

(56) Entgegenhaltungen:
- EP-A1- 0 401 729
- EP-A1- 0 764 252
- DE-A1- 4 137 240
- US-B1- 6 331 216

## Beschreibung

Die Erfindung betrifft ein Verbinderteil zum Verschrauben von Rohren, welches aus einem metallischen Grundkörper mit einem Innenkanal gebildet ist, der mindestens auf einer Seite eine Aufnahmeöffnung mit einem sich nach außen erweiternden Innenkonus aufweist, wobei sich außenseitig auf der mindestens einen Seite des metallischen Grundkörpers ein umfangsgemäß verlaufendes Außengewinde befindet.

Der sich nach außen erweiternde Innenkonus des metallischen Verbinderteils ist zur Aufnahme eines Rohrleitungsendes und das Außengewinde zum Verschrauben mit einem Überwurf-Verschraubungsteil bestimmt.

Die Herstellung des Grundkörpers des bekannten Verbinderteils umfasst dabei bekanntermaßen insbesondere zumindest einen spanenden Bearbeitungsschritt, vorzugsweise mehrere spanende Bearbeitungsschritte, wie ein Bohren des Innenkanals, ein Schneiden des Außengewindes und eine spanende Konusherstellung.

Insofern betrifft die Erfindung des Weiteren ein Herstellungsverfahren für ein Verbinderteil der genannten Art, welches zumindest einen spanabhebenden Bearbeitungsschritt zur Herstellung des metallischen Grundkörpers aus einem Rohling umfasst.

Ein Verbinderteil der eingangs genannten Art gehört auf dem Gebiet der Rohrverbindungstechnik zum Herstellungsprogramm der Anmelderin und hat sich in der Praxis bewährt. Insbesondere ist es Bestandteil einer Produktpalette, die mit einem unter dem Namen "Voss*form*" bekannten - teilweise patentierten bzw. zum Patent angemeldeten - Montagesystem installiert werden kann.

So wird beispielsweise in der WO 2011/029687 A1 eine Rohrverschraubung zum Anschluss einer Rohrleitung beschrieben, die einen nominellen Außenquerschnitt, einen nominellen Innenquerschnitt, eine nominelle Wandstärke sowie ein Anschlussende mit einem durch Umformung gebildeten Wandbereich aufweist. Die Verschraubung besteht aus einem - dort als Anschlussteil bezeichneten - Verbinderteil und einem zum abgedichteten Halten der Rohrleitung mit dem Anschlussteil verschraubbaren Überwurf-Verschraubungsteil, wobei das Anschlussteil eine Aufnahmeöffnung mit einem sich in Richtung auf die Rohrleitung hin nach außen erweiternden Innenkonus aufweist. Der umgeformte Wandbereich des Anschlussendes der Rohrleitung ist dabei formschlüssig und/oder kraftschlüssig zwischen dem Anschlussteil und dem Verschraubungsteil einspannbar. Das genannte Dokument beschreibt auch ein Verfahren zur Herstellung einer Rohrverschraubung der dort beschriebenen Art, wobei ein Wandbereich eines Anschlussendes einer Rohrleitung einer Umformung unterworfen, und wobei bei Krafteinleitung in axialer Richtung der Rohrleitung in einer Form eines Werkzeugs eine Außenkontur des Anschlussendes ausgebildet wird.

Die vorgenannten nominellen Werte der Rohrleitung sowie die Maße der übrigen Teile, insbesondere des Verbinderteils, unterliegen dabei vorzugsweise der Normung. Dies ist insofern von Bedeutung, als derartige Rohrverschraubungen zu den weltweit verbreitetsten Verbindungssystemen der Hydraulik gehören, wobei die Komponenten, insbesondere aber die Verbinderteile, in Massenproduktionsserien hergestellt werden. Außerdem handelt es sich um sicherheitsrelevante Bauteile, deren Versagen zu Sach- und schlimmstenfalls sogar zu Personenschäden führen kann. Die Einhaltung der Norm-Forderungen ist daher von erheblicher Bedeutung.

So beziehen sich z. B. die internationale Norm ISO 8434-1:2008-02, bzw. auch die korrespondierende DIN 2353:2013-01, auf Schraubverbindungen, die für das abdichtende Verbinden eines Rohres mit einem Rohrverbindungsteil oder Einschraubteil eingesetzt werden. In diesen Normen werden sogenannte 24°-Konus-Verbinder in verschiedenen Ausführungen beschrieben. Die Verbindungen umfassen insbesondere ein Anschlussteil - also ein "Verbinderteil" entsprechend der oben verwendeten Begrifflichkeit - und ein mit dem Anschlussteil verschraubbares Überwurf-Verschraubungsteil. Sie entsprechen somit der Art, wie sie auch für den Gegenstand der WO 2011/029687 A1 gattungsgemäß ist. Die Winkelangabe "24°" bezieht sich dabei auf die Größe des Öffnungswinkels des sich in Richtung auf die Rohrleitung hin nach außen erweiternden, insbesondere als kegelige Bohrung ausgeführten, Innenkonus des Anschlussteils.

In der Norm ISO 8434-1:2008-02 sind des Weiteren Anforderungen an die Ausführung und Funktionsfähigkeit von 24°-Rohrverschraubungen mit Schneidring und O-Ring-Dichtkegel - kurz als DKO bezeichnet - festgelegt, die für die Verwendung mit Stahlrohren und Rohren aus Nichteisenmetallen mit einem Außendurchmesser von 4 mm bis einschließlich 42 mm geeignet sind. Diese Rohrverschraubungen sind für die Verbindung von Rohren mit geraden Enden und Schlaucharmaturen mit Einschraub-Löchern nach DIN EN ISO 1179-1:2014-03, DIN EN ISO 6149-1:2007-05 und DIN EN ISO 9974-1:2000-09 in der Fluidtechnik sowie in allgemeinen Anwendungen vorgesehen. In der ISO 8434-1:2008-02 sind außerdem auch Begriffe definiert, sowie bevorzugte Werkstoffe, wie Baustähle und Messing, dann Druck- und Temperaturanforderungen, mögliche Ausführungen und einzuhaltende Maße der Verbinderteile, Bestellangaben und schließlich notwendigerweise durchzuführende Prüfungen festgelegt.

Was die möglichen Ausführungen betrifft, so gibt es beispielsweise gerade, gewinkelte, T-förmige und richtungseinstellbare Verbinderteile, sowie auch Sondertypen, wie beispielsweise solche mit einer Querschnitts-Reduzierung des Innenkanals im metallischen Grundkörper oder mit speziellen Messgeräte-Anschlüssen, wie für Manometer.

Eine ähnliche Verschraubung, wie die aus der WO 2011/029687 A1 bekannte, mit 24°-Konus ist auch dem Patent EP 1 260 750 B1 der Anmelderin zu entnehmen.

Das dort als Anschlussstutzen bezeichnete Teil kann ebenfalls als Verbinderteil der eingangs genannten Art angesehen werden. Das Patent EP 0 764 252 A1 offenbart ebenfalls ein Verbinderteil zum Verschrauben von Rohren.

Bei den durch die Norm ISO 8434-1:2008-02 erfassten Verschraubungen handelt es sich um Schraubverbindungen, die jeweils unter Einsatz eines Schneidrings hergestellt werden. Ein solcher Schneidring ist bekanntermaßen ein auf dem Außenumfang der Rohrleitung sitzendes Ringteil, das die Rohrleitung an ihrem Anschlussende form- und kraftschlüssig zwischen dem Anschlussstutzen und dem Verschraubungsteil einspannt. Der Schneidring weist an seiner dem Anschlussteil zugewandten Seite einen Schneidenabschnitt mit mindestens einer Schneide auf, die sich bei Anzug des Verschraubungsteils unter der Wirkung der kegeligen Bohrung des Anschlussteils axial auf das Anschlussteil zuschiebt und gleichzeitig radial in die Wandung des zu verbindenden Rohres einschneidet. Das Anschlussende der Rohrleitung ist dabei - bis auf einen kleinen durch die Schneide deformierten Bereich - in seinem Querschnitt, insbesondere hinsichtlich seines Innen- und Außendurchmessers, genauso wie der übrige Rohrkörper ausgeführt, also durchmessergleich.

In diesem Zusammenhang ist zu erwähnen, dass das 24°-Verschraubungs-Programm der Anmelderin sehr vielfältige Systemlösungen anbietet, so beispielsweise eine leichte Baureihe L und eine schwere Baureihe S, welche sich durch unterschiedliche Druckstufen und Abmessungen unterscheiden. Alle Nenndruck-Angaben (Bezeichnung "PN") sind dabei mit vierfacher Sicherheit ausgelegt. Außerdem ist dynamischen Druckveränderungen Rechnung getragen, wobei entsprechende Tests nach der Norm DIN EN ISO 19879:2011-01 durchzuführen sind. Dementsprechend müssen die Prüflinge Druckpulsationen einer Frequenz von 1 Hz mit einem Maximalwert von 33 % über dem Nenndruck beschädigungsfrei standhalten.

Im Rahmen der ständig steigenden technischen Anforderungen ist einer Tendenz zu höheren Druckbelastungen Rechnung zu tragen, welche die normativ festgelegten Werte übersteigen. Hintergrund dieser Forderung ist die Reduzierung von Leistungsverlusten in der Hydraulik. So ergibt sich die Leistung aus dem Produkt von Druckdifferenz und Durchfluss am Verbraucher. Wenn bedarfsweise der Durchfluss verringert, also der Volumenstrom reduziert werden soll, muss zur Aufrechterhaltung einer konstanten Leistung der Systemdruck angehoben werden. Auf diesen höheren Systemdruck hin muss dann das Leitungssystem ausgelegt sein.

Der normale konstruktive Weg - nämlich höhere Wandstärken für das Verbinderteil vorzusehen - ist dabei jedoch versperrt, da die genormten Maße des Verbinderteils in diesem Fall nicht eingehalten werden könnten.

Ein anderer - naheliegender und grundsätzlich im Rahmen der Normung zulässiger - Weg, um dem Problem abzuhelfen, besteht darin, einen höherfesten metallischen Werkstoff einzusetzen. Werden heute üblicherweise für Rohrverschraubungen beispielsweise vergütbare Automatenstähle eingesetzt, so könnte als höherfester Werkstoff stattdessen z. B. ein mit Chrom und Molybdän legierter Vergütungsstahl, wie 42MnCr5, eingesetzt werden. Derartige Vergütungsstähle lassen sich aber nachteiligerweise auf Großserien-Zerspanmaschinen aufgrund einer ungünstigen Langspan-Bildung nicht verarbeiten.

Bei Hydaulikarmaturen in der petrochemischen Industrie werden auch hochlegierte Edelstähle, z. B. mit der Werkstoffnummer 1.4571 nach DIN EN 10027-2:2015-07 (auch X6CrNiMoTi17-12-2, AISI 316 Ti oder V4A), und Titan für Verbinderteile der eingangs genannten Art eingesetzt. Jedoch entsteht dabei aufgrund der höheren Kosten der Werkstoffe ein erhöhter Herstellungsaufwand, der vermieden werden sollte. Zudem geht auch hier mit einer höheren Festigkeit des metallischen Werkstoffs in der Regel eine Verschlechterung der Zerspanbarkeit einher, was im Rahmen einer optimalen Fertigungstechnologie nicht toleriert werden kann, weil es nachteilhaft - insbesondere unter dem Gesichtspunkt der Massenproduktion - die Fertigungszeit enorm in die Höhe treiben oder den Einsatz von extrem verschleißfesten oder in kurzen Zeitabständen nachzuschleifenden bzw. zu erneuernden Werkzeugen erfordern würde. So wird beispielsweise für den genannten Werkstoff 1.4541 (nach DIN EN 10027-2:2015-07) empfohlen, für die spanabhebende Bearbeitung nur äußerst gut geschliffenes Werkzeug zu verwenden, wobei außerdem darauf hingewiesen wird, dass durch den Einschluss von sehr harten Titancarbiden aufgrund eines Aus- und Mitreißens von Titancarbidkörnern bei der mechanischen Bearbeitung unerwünschte Riefen in der Oberfläche des zu bearbeitenden Teils erzeugt werden können.

Unter Berücksichtigung der vorgenannten Ausführungen besteht das der Erfindung zugrunde liegende Problem darin, ein Verbinderteil der eingangs genannten Art und ein Verfahren zu seiner Herstellung bereitzustellen, wobei das Verbinderteil sowohl aus einem gut zerspanbaren metallischen Werkstoff bestehen, als auch bei gleichbleibenden geometrischen Abmessungen eine im Vergleich zum Stand der Technik verbesserte statische und dynamische Festigkeit, insbesondere Druckfestigkeit, aufweisen soll. Die verbesserte Qualität soll dabei im Rahmen des erfindungsgemäßen Verfahrens mit minimalisiertem technologischem Zusatzaufwand erreicht werden.

Diese Aufgabe wird für das Verbinderteil erfindungsgemäß dadurch gelöst, dass der metallische Grundkörper aus einem mikrolegierten, ausscheidungsgehärteten, ferritisch-perlitischen Stahl besteht, gemäß dem Anspruch 1.

Die Erfindung und bevorzugte Ausrührungsformen davon sind in den Ansprüchen dargelegt. Derartige Stähle werden auch als AFP-Stähle (**a**usscheidungshärtend, ferritisch**p**erlitisch) bezeichnet, wobei deren Einsatz auf anderen Gebieten, insbesondere - in der Automobilindustrie als Alternative zu Gusswerkstoffen - zur Herstellung von Kurbelwellen, Pleueln, Achsschenkeln, Querlenkern etc., an sich seit längerem bekannt ist. Die Verwendung zur Herstellung von gattungsgemäßen Verbinderteilen ist jedoch völlig neu und ermöglicht es, bei ausgezeichneter Zerspanbarkeit und bei konstant bleibenden geometrischen Abmessungen des erfindungsgemäßen Verbinderteils eine erhöhte Festigkeit zu erzielen.

Als mikrolegiert bezeichnet man dabei Stähle, denen man vorzugsweise 0,01 Masse-% bis 0,1 Masse-% an bestimmten Legierungselementen zulegiert hat, um insbesondere über eine Ausbildung von Karbiden und Nitriden der Legierungselemente und eine dadurch beim Abkühlen auftretende Kornfeinung eine hohe Festigkeit zu erzielen. Die Legierungselemente lösen sich bei Erwärmung auf Umformtemperatur, oberhalb der sogenannten Austenitisierungstemperatur, zumindest teilweise im Eisen auf. Sie bilden dann bei der Wiederabkühlung mit Kohlenstoff Karbide und mit Stickstoff Nitride. Diese nichtmetallischen Bestandteile sind in der Gefügestruktur des Stahles dann fein verteilt, so dass aufgrund der dadurch bewirkten geringen Kristallitgröße die Festigkeit gesteigert wird, und zwar vorteilhafterweise ohne einen Abfall der Zähigkeit. Dies wird als Ausscheidungshärtung bezeichnet. Im Rahmen der erfindungsgemäßen Mikrolegierung ist vorgesehen, dass der ausscheidungshärtende, ferritisch-perlitische Stahl die maßgeblichen Legierungselemente in einem Anteil im Bereich von 0,05 Masse-% bis 0,2 Masse-%, also in einem weiteren Bereich als dem allgemein üblichen, enthält.

Ferrit ist die metallographische Bezeichnung für die kubisch-raumzentrierte Modifikation des reinen, sogenannten *α*-Eisens und seiner Mischkristalle. Ferrit ist mit einer Härte von etwa 60 HV sehr weich, er ist gut verformbar, und seine Wärmedehnung ist gering, ebenso seine Lösungsfähigkeit für Kohlenstoff. Sie liegt bei 0,02 Masse-% Kohlenstoff im Eisen. Auch die Kräfte, welche zu seiner Zerspanung aufgewendet werden müssen, sowie sein Verschleiß liegen niedrig. Problematisch ist jedoch bei der Bearbeitung seine hohe Verformungsfähigkeit. Diese führt bei reinen ferritischen Werkstoffen zu langen Band- und Wirrspänen, die sich in der Maschine verfangen können, und zur Bildung von Graten und somit zu schlechten Oberflächenqualitäten. Außerdem neigen Werkstoffe mit ferritischem Gefüge bei geringen Schnittgeschwindigkeiten zum Verkleben mit der Schneide des spanabhebenden Werkzeugs.

Die Bildung der ferritischen Phase wird durch austenit- oder ferritstabilisierende Elemente beeinflusst. Austenitbildner sind zum Beispiel die Elemente Nickel, Mangan, Stickstoff, Kohlenstoff und Kobalt, wobei Austenit die metallographische Bezeichnung für die kubisch-flächenzentrierte Modifikation des reinen, sogenannten *γ*-Eisens ist, die insbesondere bei hohen Temperaturen vorliegt. In *γ*-Eisen sind 2,06 Masse-% Kohlenstoff löslich. Austenitbildner hemmen die Bildung der ferritischen α-Mischkristalle, während Ferritbildner wie Chrom, Silizium, Molybdän, Vanadium, Titan und Aluminium deren Entstehung begünstigen.

In bevorzugter Ausbildung der Erfindung ist vorgesehen, dass der mikrolegierte, ausscheidungshärtende, ferritisch-perlitische Stahl als Legierungselement(e) Niob und/oder Vanadium, insbesondere in dem vorstehend genannten Anteil im Bereich von 0,05 Masse-% bis 0,2 Masse-%, enthält. Bevorzugt ist dabei die alleinige Präsenz von Vanadium, da zwar Niob die Festigkeit - insbesondere die dafür charakteristische sogenannte 0,2 %-Streckgrenze, unterhalb derer das Material nach Entlastung elastisch in seine ursprüngliche Form zurückkehrt - stärker als Vanadium anhebt, jedoch beim Ausscheidungshärten ein ungünstigeres Verhalten zeigt. So resultieren z. B. bei Warmumformungstemperaturen von oberhalb von 1150 °C bereits aus geringen Streuungen der Temperatur unverhältnismäßig große Streuungen der Festigkeit des erfindungsgemäßen Verbinderteils.

Perlit ist ein lamellar angeordneter, eutektoider Gefügebestandteil des Stahles, wobei ein Eutektoid dadurch gekennzeichnet ist, dass sich in ihm zwei fein ineinander verteilte feste Phasen befinden. Perlit ist ein Phasengemisch aus Ferrit und Zementit, wobei der Zementit (Eisencarbid) darin vorzugsweise in Lamellenform vorliegt. Ein vollständig perlitisches Gefüge enthält 0,83 Masse-% Kohlenstoff. Die Zerspanbarkeit also die Bearbeitbarkeit durch Bohren, Fräsen, Drehen etc., wird maßgeblich durch seine mechanischen Eigenschaften beeinflusst. Die Härte liegt bei etwa 210 HV, die Zugfestigkeit bei 700 N/mm² und die Bruchdehnung bei 48 %. Die Werte liegen somit - verglichen mit anderen Bestandteilen von Stahl - in einem mittleren Bereich. Der Zementit liegt meist in Form von fein verteilten Zeilen vor, durch eine Wärmebehandlung kann er jedoch auch in globulare (kugelige) Form gebracht werden. Wegen der vergleichsweise großen Härte gegenüber Ferrit verursacht Perlit einen höheren abrasiven Verschleiß und größere Zerspankräfte. Er neigt jedoch weniger zum Verkleben mit einer Werkzeugschneide. Die sich ausbildenden Spanformen sind günstiger als bei Ferrit, und die erreichbaren Oberflächenqualitäten sind besser, weil Perlit nicht zum Bilden von Graten neigt.

Ein ferritisch-perlitischer Stahl enthält demnach sowohl Ferrit als auch Perlit, was implizit bedeutet, dass sein Kohlenstoffgehalt größer als 0 Masse-% und kleiner als 0,83 Masse-% ist. In bevorzugter Ausbildung der Erfindung ist vorgesehen, dass der mikrolegierte, ausscheidungshärtende, ferritisch-perlitische Stahl einen Perlitanteil im Bereich von 45 Masse-% bis 85 Masse-%, enthält. Dadurch ergeben sich sowohl eine hohe Festigkeit als auch ein optimales Zerspanungsverhalten.

Ausscheidungshärtende, ferritisch-perlitische Stähle (AFP-Stähle) sind durch die DIN EN 10267:1998-02 normativ erfasst.

Als im Rahmen der Erfindung besonders geeignete Ausgangs-Werkstoffe werden Stähle mit folgender Zusammensetzung angesehen:

| | | |
|---|---|---|
| - 0,15 | Masse-% bis 0,50 | Masse-% Kohlenstoff, |
| - 0,10 | Masse-% bis 1,00 | Masse-% Silizium, |
| - 0,80 | Masse-% bis 1,90 | Masse-% Mangan, |
| - 0,008 | Masse-% bis 0,20 | Masse-% Schwefel, |
| - 0,004 | Masse-% bis 0,04 | Masse-% Stickstoff, |
| - 0,05 | Masse-% bis 0,20 | Masse-% Vanadium und/oder Niob, |

| | | |
|---|---|---|
| - Rest Eisen und erschmelzungsbedingte Verunreinigungen, wie z. B. durch Phosphor. Nicht bevorzugt, aber erfindungsgemäß auch nicht ausgeschlossen ist allerdings dabei, dass der "Rest Eisen" noch Chrom und/oder Molybdän enthält, wie dies in den Beispielen der noch nachfolgend aufgeführten Tabelle 1 angegeben ist, oder auch - wie ebenfalls nachstehend noch erwähnt - Aluminium, z. B. in Masseanteilen von 0,02 Masse-% bis 0,04 Masse-%, und gegebenenfalls auch Titan, z. B. in Masseanteilen von 0,01 Masse-% bis 0,02 Masse-%. | | |

Vorzugsweise können dabei die Stähle 30MnVS6 (Werkstoffnummer 1.1302 nach DIN EN 10027-2:2015-07) und 38MnVS6 (Werkstoffnummer 1.5231 nach DIN EN 10027-2:2015-07) zum Einsatz kommen. Eine geringere Eignung zeigten der Stahl 19MnVS6 (mit geringerem Kohlenstoffgehalt) sowie die Stähle 46MnVS6 und 46MnVS3 (jeweils mit höherem Kohlenstoffgehalt). Als optimaler Kohlenstoffgehalt kann somit ein solcher im Bereich von 0,27 Masse-% bis 0,42 Masse-% angesehen werden.

Für das Verfahren wird die der Erfindung zugrunde liegende Aufgabe erfindungsgemäß dadurch gelöst, dass als Rohling für den metallischen Grundkörper ein mikrolegierter AFP-Stahl mit einer Zusammensetzung gemäß Anspruch 1 eingesetzt wird, der auf eine Warmumformungstemperatur gebracht und bei dieser Temperatur umgeformt wird, sowie nach einer mit einer Ausscheidungshärtung verbundenen Abkühlung auf Umgebungstemperatur mit einer Abkühlgeschwindigkeit im Bereich von 0,1 K/min bis 20 K/min der spanabhebenden Bearbeitung gemäß Anspruch 11 unterzogen wird. Die Warmumformung kann dabei bevorzugt ein Gesenk-Schmiedeprozess sein. Bekanntermaßen werden mit Warmumformung all diejenigen Umformschritte bezeichnet, die oberhalb der Rekristallisationstemperatur eines Metalls stattfinden, so dass sich die Warmumformungstemperatur aus der jeweiligen Rekristallisationstemperatur (Ac3-Temperatur, Temperatur der γ/α-Umwandlung des Eisens) des warmumzuformenden Materials ergibt, welche von dessen Zusammensetzung abhängt und vom Fachmann den jeweiligen Materialdatenblättern entnommen werden kann. Die Warmumformung sollte mindestens 30 K bis 50 K über der Rekristallisationstemperatur liegen, wobei in Schmiedebetrieben in der Regel im Hinblick auf möglichst niedrige Umformkräfte und geringen Werkzeugverschleiß mit demgegenüber noch erhöhten Umformtemperaturen gearbeitet wird. Andererseits beeinflusst der zu Beginn der Umformung vorliegende Zustand des Austenits auch das sich später einstellende Gefüge im Verbinderteil, indem beispielsweise eine durch Absenkung der Umformtemperatur erzielbare geringere Austenitkorngröße die Bildung eines feinkörnigeren Ferrit-Perlit-Gefüges mit verbesserter Zähigkeit erwarten lässt. Konkret kann die Warmumformungstemperatur unter Berücksichtigung dessen insbesondere im Bereich von 870 °C und 1330 °C, vorzugsweise im Bereich von 950 °C bis 1280 °C, liegen.

Was die Abkühlung von der Warmumformtemperatur auf Umgebungstemperatur (Raumtemperatur, z. B. auf 20 °C) betrifft, bei der sich die Ausscheidungshärtung vollzieht, so unterscheidet sich die dafür gemäß dem erfindungsgemäßen Verfahren vorgesehene, im Bereich von 0,1 K/min bis 20 K/min, vorzugsweise im Bereich von 1 K/min bis 8 K/min, liegende, langsame Abkühlgeschwindigkeit signifikant von der Abkühlungsgeschwindigkeit der gemäß dem Stand der Technik für die herkömmlichen Verbinderteile eingesetzten Vergütungsstähle, für die nach einer Warmumformung zunächst ein Härten, also eine äußerst schnelle Abkühlung - in charakteristischer Weise beispielsweise mit einer ungleich höheren Geschwindigkeit von 5 Kelvin pro Sekunde, also 300 K/min, vorzusehen ist. Dafür werden als Kühlmedium bekanntermaßen Wasser, Öl oder Luft eingesetzt, während man in Bezug auf die Abkühlung gemäß dem erfindungsgemäßen Verfahren bevorzugt von einer sogenannten Ofenabkühlung spricht, wobei jedoch auch eine Luftabkühlung, z. B. mittels Umluft in einem Kammerofen, in Frage kommt.

Durch den Wegfall der für Vergütungsstähle, aber auch der für die eingangs erwähnten hochlegierten Edelstähle notwendigen mehrstufigen Bearbeitungsschritte Härten, Anlassen, Richten und möglichenfalls auch des Entspannens sowie deren erfindungsgemäßen Ersatz durch eine einstufige, insbesondere kontinuierliche Abkühlung ohne Variation der Abkühlbedingungen, werden hinsichtlich des Energieaufwands zur Herstellung eines erfindungsgemäßen Verbinderteils bedeutende Einsparungen erzielt.

Durch die gewählte Abkühlungsgeschwindigkeit kann einerseits die Art der Gefügeausbildung, also das sich ausbildende Verhältnis von Ferrit zu Perlit im Gefüge, und andererseits auch die Kornfeinheit kontrolliert beeinflusst werden. Die bevorzugte Korngröße des Ferrits und Perlits sollte im Bereich von 3,5 bis 6,0 gemäß der Bildreihentafel nach ASTM E 112:2013 "Standard Test Methods for Determining Average Grain Size" liegen.

Zur Orientierung darüber, wie diese kontrollierte Einstellung der Abkühlgeschwindigkeit im Detail zu realisieren ist, können gegebenenfalls bekannte, für jeden Werkstoff individuell zu berücksichtigende ZTU-Schaubilder (Zeit-Temperatur-Umwandlungs-Schaubilder) herangezogen werden. ZTU-Schaubilder können - falls nicht bekannt - jedoch vom Stahlhersteller auch unter Einsatz von mehreren sogenannten Primärproben-Serien erstellt werden, die über die Temperatur der γ/α-Umwandlung erwärmt werden und dann verschiedenen definierten Abkühlungskurven unterworfen werden, wobei nach einer gestuften Abkühlung auf bestimmte Temperaturniveaus an den Proben jeweils eine Gefügeanalyse sowie die Bestimmung weiterer Parameter, wie der Härte, der Zugfestigkeit und der Streckgrenze, erfolgen, die in das Schaubild eingetragen werden.

Aus in den im AFP vorhandenen metallischen Legierungselementen, wie Niob, Vanadium, vorzugsweise auch Mangan und gegebenenfalls Titan, bilden sich bei der Abkühlung nach der Warmumformung nicht nur Carbide und Nitride, sondern bei Anwesenheit von Schwefel und von gegebenenfalls als Verunreinigung enthaltenem Sauerstoff auch Sulfide bzw. Oxide. Zwar weisen die AFP-Stähle schon allein aufgrund ihres Ferrit-Perlit-Mischgefüges im Vergleich zu Vergütungsstählen günstigere Spanbarkeitseigenschaften auf, jedoch wird das Spanbarkeitsverhalten auch von diesen, im Stahl vorhandenen nichtmetallischen, sulfidischen und gegebenenfalls oxidischen Einschlüssen mitbestimmt. Von großer Bedeutung ist dabei der Schwefelgehalt, der in dem bereits genannten Bereich von 0,008 Masse-% bis 0,2 Masse-%, vorzugsweise aber in einem Bereich von 0,01 Masse-% bis 0,12 Masse-%, liegen sollte. Auch die Ausbildungsform der Sulfide kann u. U. eine Rolle spielen. Es sind dabei - z. B. unter dem Stichwort: "Stahlberuhigung", die in einer Zulegierung von geringen Silizium- und/oder Aluminiumanteilen bestehen kann - metallurgische Maßnahmen bekannt, durch die - sollte dies zweckmäßig erscheinen - erhöhten Schwefelgehalten entgegengewirkt, die Sulfidform verbessert sowie der oxidische Reinheitsgrad des Stahles angehoben werden kann, wodurch sich die Spanbarkeit noch weiter verbessert.

Unter diesem Aspekt ist in einer bevorzugten Ausführung der Erfindung vorgesehen, dass gestreckte nichtmetallische Einschlüsse der Gruppe α (EA) nach der DIN EN 10247:2007 entsprechen. Des Weiteren ist es bevorzugt, wenn in einem hergestellten optischen Schliff der Flächenanteil der Mangansulfide bei maximal 2,3 Prozent der betrachteten Fläche liegt und wenn für 90 Prozent der Schlifffläche die Sulfidausbildung den Stufen 1.1 bis 2.2 gemäß der Norm SEP 1572:1971 entspricht.

Die sich an die Abkühlung anschließende Spanabhebung umfasst mindestens einen Bearbeitungsschritt oder mehrere bzw. alle der Bearbeitungsschritte
- Bohren des Innenkanals des Grundkörpers,
- Schneiden des Außengewindes,
- spanende Konusherstellung.

In bevorzugter Ausführung der Erfindung kann sich an die Spanabhebung außerdem noch eine mechanische Oberflächenbearbeitung des Innenkanals, insbesondere durch ein Kugelstrahlen, anschließen, durch welche die Durchflusseigenschaften des erfindungsgemäßen Verbinderteils verbessert und die Festigkeit in seinen Randbereichen, insbesondere im Bereich der Bohrungswandung, noch weiter erhöht werden können. Dabei kann danach der Innenkanal beispielsweise eine Oberflächenrauheit Rₐ nach DIN EN ISO 4288:1998-04 im Bereich von 1,0 µm bis 3,0 µm aufweisen, wobei die gemittelte Profiltiefe Rz im Bereich von 5 µm bis 35 µm liegt. Dies wirkt sich u. a. günstig auf die Verhinderung eines frühzeitigen Auftretens einer nichtlaminaren Strömung aus, also einem Einsetzen einer turbulenten Strömung bei schon vergleichsweise niedrigen Reynoldszahlen.

Weitere vorteilhafte Ausgestaltungen der Erfindung ergeben sich aus der folgenden Figurenbeschreibung und den abhängigen Ansprüchen.

Es zeigen:
- Fig. 1: einen Axialschnitt durch eine bevorzugte Ausführungsform eines erfindungsgemäßen Verbinderteils,
- Fig. 2: Vorderansicht des in Fig. 1 dargestellten erfindungsgemäßen Verbinderteils,
- Fig. 3: ein exemplarisches ZTU-Schaubild für einen mikrolegierten, ausscheidungshärtenden, ferritisch-perlitischen Stahl.

In den verschiedenen Figuren der Zeichnung sind gleiche Teile stets mit denselben Bezugszeichen versehen und werden daher in der Regel nur einmal beschrieben.

In Bezug auf die anschließende Beschreibung wird dabei beansprucht, dass die Erfindung nicht auf das Ausführungsbeispiel und dabei nicht auf alle oder mehrere Merkmale von beschriebenen Merkmalskombinationen beschränkt ist, vielmehr ist jedes einzelne Teilmerkmal des Ausführungsbeispiels auch losgelöst von allen anderen im Zusammenhang damit beschriebenen Teilmerkmalen für sich und auch in Kombination mit anderen Merkmalen von Bedeutung für den Gegenstand der Erfindung, wobei der Gegenstand der Erfindung nur durch den Schutzumfang der Ansprüche begrenzt wird.

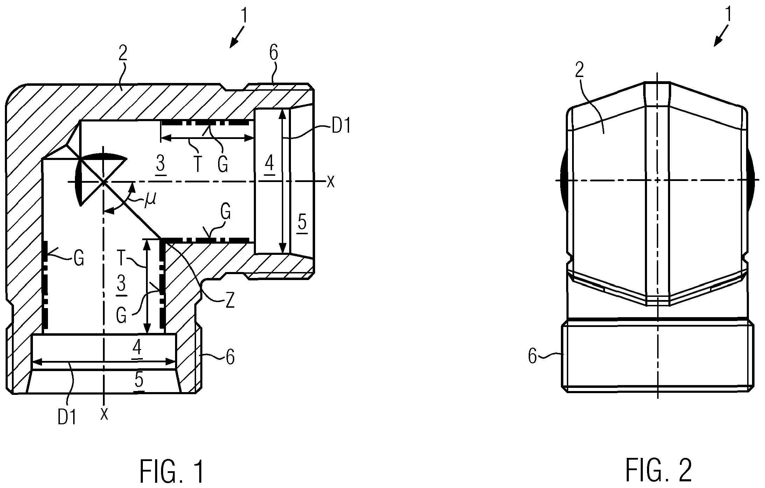

Fig. 1 und Fig. 2 zeigen exemplarisch ein erfindungsgemäßes Verbinderteil 1 zum Verschrauben von Rohren, welches aus einem metallischen Grundkörper 2 mit einem Innenkanal 3 gebildet ist, der mindestens auf einer Seite - im dargestellten Fall für einen beidseitigen Rohranschluss auf beiden Seiten - eine Aufnahmeöffnung 4 mit einem sich nach außen erweiternden Innenkonus 5 aufweist, wobei sich außenseitig auf dem Umfang des Grundkörpers 2 ein Außengewinde 6 befindet. Das Verbinderteil 1 besitzt insbesondere zur Ausführung von Winkelverschraubungen eine Ausbildung als Winkelverbinder, wobei die Achse X-X des Innenkanals 3 von einer gestreckten Form abweicht und einen Winkel µ mit einer bevorzugten Größe von 90° einschließt. Seine Maße sind durch die internationale Norm ISO 8434-1:2008-02 festgelegt.

Erfindungsgemäß besteht der metallische Grundkörper 2 aus einem mikrolegierten, ausscheidungsgehärteten, ferritisch-perlitischen Stahl. Hierbei kann es sich bevorzugt um den Stahl 30MnVS6 (Werkstoffnummer 1.1302 nach DIN EN 10027-2:2015-0738, auch als 27MnSiVS6 nach der Stahl-Eisen-Liste bezeichnet) oder den Stahl 38MnVS6 (Werkstoffnummer 1.5231 nach DIN EN 10027-2:2015-07, auch als 38MnSiVS5 nach der Stahl-Eisen-Liste bezeichnet) handeln. Die chemischen Zusammensetzungen der genannten Stähle sind der Tabelle 1 zu entnehmen.

Die in dieser Tabelle genannten Prozentangaben ergänzen sich dabei mit dem Eisenanteil der Stähle und gegebenenfalls vorhandenen Verunreinigungen zu 100 Masseprozent.

Wie aus der Tabelle 1 leicht zu ersehen ist, unterscheiden sich die beiden Stähle nur durch ihren Kohlenstoffgehalt voneinander. Das Gefüge von 30MnVS6 besteht aus Perlit mit Ferrit in einem Anteil im Bereich von 30 Masse-% bis 50 Masse-%, während das Gefüge von 38MnVS6 aus Perlit mit Ferrit besteht, dessen Anteil im Bereich von 10 Masse-% bis 30 Masse-% liegt.

**Tabelle 1: Chemische Zusammensetzung von 30MnVS6 und 38MnVS6**

| Element | Anteil in Masse-% 30MnVS6 | Anteil in Masse-% 38MnVS6 |
|---|---|---|
| Kohlenstoff | 0,26 - 0,33 | 0,34 - 0,41 |
| Silizium | 0,15 - 0,80 | 0,15 - 0,80 |
| Mangan | 1,20 - 1,60 | 1,20 - 1,60 |
| Phosphor | < 0,025 | < 0,025 |
| Schwefel | 0,020 - 0,060 | 0,020 - 0,060 |
| Chrom | < 0,30 | < 0,30 |
| Molybdän | < 0,08 | < 0,08 |
| Vanadium | 0,08 - 0,20 | 0,08 - 0,20 |
| Stickstoff | 0,01 - 0,02 | 0,01 - 0,02 |

Die mechanischen Eigenschaften der genannten Stähle sind der Tabelle 2 zu entnehmen.

**Tabelle 2: Mechanische Eigenschaften von 30MnVS6 und 38MnVS6 ermittelt nach DIN EN ISO 6892-1:2017-02 (Zugversuch)**

| Parameter | 30MnVS6 | 38MnVS6 |
|---|---|---|
| Streckgrenze R_{p0,2} [N/mm²] | ≥ 450 | ≥ 520 |
| Zugfestigkeit Rₘ [N/mm²] | 700 - 900 | 800 - 950 |
| Bruchdehnung A₅ [%] | ≥ 14 | ≥12 |
| Brucheinschnürung Z [%] | ≥30 | ≥25 |

Beide Stähle sind für eine Warmformgebung und Wärmebehandlung mit folgenden Parametern vorgesehen:
- Ofentemperatur vor der Warmformgebung: 1220 °C bis 1280 °C,
- Einzelablage an Luft von 1000 °C auf 500 °C zur Abkühlung,
- Entspannen (falls notwendig) bei ≤ 600 °C.

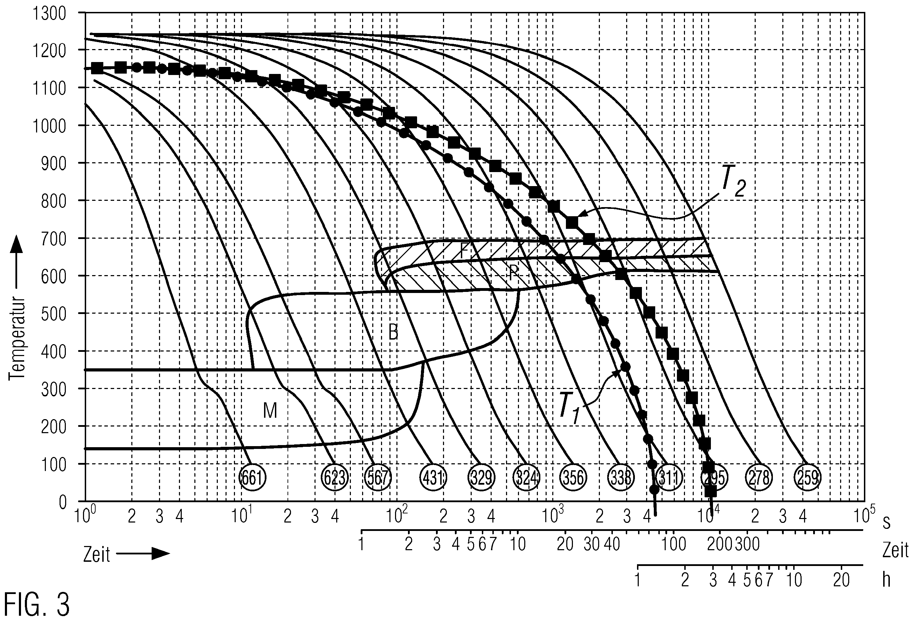

Für den Stahl 38MnVS6 werden durch das in Fig. 3 wiedergegebene ZTU-Schaubild geeignete Wärmebehandlungen veranschaulicht. In dem ZTU-Schaubild ist dabei auf der Abszisse die Zeit in logarithmischem Maßstab (in s - Sekunden, min - Minuten, h - Stunden) und auf der Ordinate in linearem Maßstab die Temperatur (in °C) aufgetragen. Hierbei markieren die abfallenden dünnen Linien verschiedene Abkühlungskurven von zur Erstellung des Schaubildes eingesetzten Primärproben. Diese beginnen bei drei unterschiedlichen Temperaturen (1050 °C, 1150 °C und 1250 °C) und enden bei etwa 100 °C. Am Kurvenende ist - durch eine eingekreiste Zahl dargestellt - eine sich jeweils einstellende Vickers-Härte (nach DIN EN ISO 6507-1:2006-03) angegeben.

Das sich jeweils bei Abkühlung einstellende Gefüge ist durch Bereiche im Schaubild, die von entsprechenden Linien umrandet werden, gekennzeichnet. Bei den sich je nach Abkühlungsmodus möglichenfalls ausbildenden Gefügearten handelt es sich um Martensit M, Bainit B, Perlit P und Ferrit F. Die beiden letzteren Bereiche P und F, welche erfindungswesentliche Bedeutung haben, sind dabei unterschiedlich schraffiert. Auf der Temperaturachse sind auch die Rekristallisationstemperatur Ac3, der Curie-Punkt des Ferrits Ac2 sowie die Martensitbildungs-Starttemperatur Mₛ und die Martensitbildungs-Endtemperatur M_{f} eingetragen.

Die beiden dickeren, mit den Bezugszeichen T1 und T2 bezeichneten Linien beginnen bei einer Warmumformungstemperatur von 1150 °C und enden bei Raumtemperatur. Die mit T1 bezeichnete Line (zusätzlich mit Vollkreisen markiert) bezieht sich dabei auf eine schnellere Abkühlung, die nach 1,5 Stunden auf der Abszisse endet, während sich die mit T2 bezeichnete Linie (zusätzlich mit Vollquadraten markiert) auf eine langsamere Abkühlung bezieht, die nach 3 Stunden auf der Abszisse endet. Beide Abkühlungsmodi T1, T2 stellen solche dar, die für den Teilschritt des erfindungsgemäßen Verfahrens charakteristisch sind, wonach als Rohling für den metallischen Grundkörper 2 das Verbinderteil 1 ein mikrolegierter, ausscheidungshärtender, ferritisch-perlitischer Stahl eingesetzt wird, der auf eine Warmumformungs-Temperatur gebracht und bei dieser Temperatur umgeformt wird, und danach mit einer Abkühlgeschwindigkeit im Bereich von 0,1 K/min bis 20 K/min auf Umgebungstemperatur abgekühlt wird, wobei während der Abkühlung eine Ausscheidungshärtung abläuft. Die Warmumformung ist dabei insbesondere ein Schmiedeprozess, bevorzugt ein Gesenk-Schmiedeprozess.

Die gezielte Temperatur-Zeit-Führung des Rohlings für den Grundkörper 2 des erfindungsgemäßen Verbinderteils 1 aus der Schmiedewärme ermöglicht es vorteilhafterweise, einerseits das Werkstoffgefüge zu optimieren und gleichzeitig andererseits die Prozesskette zur Herstellung des Verbinderteils 1 gegenüber der herkömmlichen Produktionstechnologie zu verkürzen.

Eine sich nach der Abkühlung einstellende im Kern des Grundkörpers 2 gemessene Vickers-Härte (nach DIN EN ISO 6507-1:2006-03) kann beispielsweise im Bereich von 265 HV10 bis 320 HV10 liegen. Hierzu ist zu bemerken, dass die Härte vom Rand ausgehend zum Inneren des Grundkörpers 2 hin absinken kann, dann aber ab einem gewissen Randabstand konstant bleibt. Die bei diesem Abstand gemessene Härte ist die Kernhärte.

An die Abkühlung schließt sich - ohne eine weitere Wärmebehandlung, wie das für Vergütungsstähle notwendige Anlassen - die mechanische Bearbeitung des Rohlings an, welche ein Bohren des Innenkanals 3, ein Schneiden des Außengewindes 6 und eine spanende Herstellung des Innenkonus 5 umfasst. Bei der spanenden Bearbeitung konnte außerdem mit hoher Prozesssicherheit und bei vorteilhaft kurzer Spanbildung eine gegenüber den bekannten Verbinderteilen erhöhte Schnittgeschwindigkeit realisiert werden.

Um in der sich nach dem Bohren des Innenkanals 3 einstellende Oberfläche eine Verfestigung zu erreichen, kann sich an die Spanabhebung eine Strahlbehandlung des Innenkanals 3, insbesondere durch ein Kugelstrahlen, anschließen. Dadurch werden bei einem späteren Einsatz des erfindungsgemäßen Verbinderteils 1 dessen Durchflusseigenschaften verbessert und die Festigkeit in seinen Randbereichen, insbesondere im Bereich der Bohrungswandung, noch weiter erhöht.

Zur Oberflächenverfestigung können kugelförmige Partikel, insbesondere Glaskugeln, verwendet werden, die auf die zu bearbeitende Innenfläche des Grundkörpers 2 geschossen werden. Die Strahlbehandlung kann insbesondere in einer Beaufschlagung der Oberfläche mit Glaskugeln eines Durchmessers im Bereich von 0,005 mm bis 0,7 mm, vorzugsweise im Bereich von 0,02 mm bis 0,3 mm, bestehen, wobei die Kugeln mittels eines Luftstrahls unter einem Druck von weniger als 10 bar, insbesondere unter einem Druck im Bereich 2 bar bis 5 bar, und unter einer Geschwindigkeit im Bereich von 5 m/s bis 40 m/s, vorzugsweise im Bereich 10 m/s bis 25 m/s, gefördert werden.

Der Einsatz von Glaskugeln zum Strahlen, insbesondere bei Einhaltung der vorgenannten technologischen Parameter, stellt im Vergleich mit anderen Strahlverfahren eine sehr schonende Behandlung dar, in deren Folge sich im Innenkanal 3 eine bestimmte Oberflächenrauheit Rₐ nach DIN EN ISO 4288:1998-04 einstellt, welche - wie bereits ausgeführt - insbesondere im Bereich von 1,0 µm bis 3,0 µm liegen kann, wobei die gemittelte Profiltiefe Rz im Bereich von 5 µm bis 35 µm liegt. Die Oberfläche weist dann ein seidig-mattes Erscheinungsbild auf, wobei ihr Mikroprofil durch sphärische Eindrücke gekennzeichnet ist. Es erfolgt dabei vorteilhafterweise keine weitere Materialabtragung, sondern nur eine oberflächliche Materialverdichtung, die zu einer Erhöhung der Eigenspannungen in der Materialoberfläche führt. Die Auftragung einer zusätzlichen Glättungsschicht ist daher nicht erforderlich. Das Kugelstrahlen kann dabei bevorzugt durch gezielte Einstellung der vorstehend genannten Parameter in der Weise durchgeführt werden, dass die Oberfläche geglättet oder zumindest die Oberflächenrauheit Rₐ nicht gegenüber ihrem vorher vorhandenen Wert vergrößert wird.

Die dabei entstehenden, elastischen und insbesondere plastischen Verformungen rufen eine sehr homogene Oberflächenstruktur hervor, wobei durch das punktuelle Aufbringen von Druckeigenspannungen und das Entlasten externer Zugspannungen unter der Kanaloberfläche auch die Dauerschwingfestigkeit, also der Widerstand gegen im Betriebszustand des erfindungsgemäßen Verbinderteils 1 auftretende Druckpulsationen, weiter erhöht und eine Fortpflanzung von eventuell vorhandenen Mikrorissen verhindert wird. Insbesondere können dabei im kugelgestrahlten Bereich ausgehend von der Oberfläche des Innenkanals 3 bis zu einer Tiefe von 0,5 mm in den Grundkörper 2 hinein Eigenspannungen in Höhe von bis zu 60 Prozent der Zugfestigkeit Rₘ des mikrolegierten, ausscheidungsgehärteten, ferritisch-perlitischen Stahls erzeugt werden.

Der Bereich des Innenkonus 5 und der sich daran anschließende zylindrische Bereich der Aufnahmeöffnung 4, die im Betriebszustand nicht mit einem in der Leitung geführten Fluid in Kontakt kommen, brauchen nicht verfestigt zu werden. In bevorzugter Ausführung ist es auch ausreichend, wenn nur die in Fig. 1 mit einer strichpunktierten Linie G gekennzeichneten Wandbereiche verfestigt, insbesondere kugelgestrahlt, werden. Diese erstrecken sich -jeweils über den gesamten Umfang des Innenkanals 3 gesehen - bevorzugt nur bis zu einer Tiefe T, die derjenigen entspricht, wo im Winkelverbinder die in der Krümmung innen liegenden Wandungsteile des Grundkörpers 2 zusammenstoßen (innerer Wandstoßpunkt Z in Fig. 1).

Für ein erfindungsgemäßes, nach der ISO 8434-1:2008-02 genormtes Verbinderteil 1, in der durch die Zeichnungsfiguren 1 und 2 veranschaulichten Ausführung mit einem Nenndurchmesser D1 von 38 mm, konnte nach einer Ausführung der in der Norm DIN EN ISO 19879:2011-01 festgeschriebenen Tests festgestellt werden, dass sich der zulässige Nenndruck PN vorteilhafterweise von 420 bar auf 630 bar, also auf 150 Prozent, erhöht.

Die Erfindung ist nicht auf das dargestellte und beschriebene Ausführungsbeispiel, insbesondere nicht auf die Ausführung als Winkelverbinder, beschränkt, sondern umfasst auch alle im Sinne der Erfindung gleichwirkenden Ausführungen. Auch gerade, T-förmige und richtungseinstellbare Verbinderteile sowie auch die eingangs genannten Sondertypen von Verbindern können bedarfsweise erfindungsgemäß ausgestaltet werden. Es wird ausdrücklich betont, dass das Ausführungsbeispiel nicht auf alle Merkmale in Kombination beschränkt ist, vielmehr kann jedes einzelne Teilmerkmal auch losgelöst von allen anderen Teilmerkmalen für sich eine erfinderische Bedeutung haben. Was das erfindungsgemäße Verfahren betrifft, so kann - für andere Werkstoffe als exemplarisch am Stahl 38MnVS6 dargestellt - mit der Vorgabe, dass martensitische und bainitische Gefügeausbildungs-Bereiche bei der Abkühlung umgangen werden, eine geeignete, anhand der jeweiligen ZTU-Schaubilder ausgewählte Abkühlungskurve von der in Fig. 3 dargestellten abweichen. Auch kann beispielsweise eine Oberflächenverfestigung auch durch Einsatz eines Laserbehandlungsverfahren erfolgen.

Die Erfindung wird lediglich durch den Schutzbereich der Ansprüche beschränkt.

### Bezugszeichenliste

- 1: Verbinderteil
- 2: Grundkörper von 1
- 3: Innenkanal in 2
- 4: Aufnahmeöffnung von 2
- 5: Innenkonus von 4
- 6: Außengewinde von 1 auf 2
- Ac2: Ferrit-Curie-Punkt (Fig. 3)
- Ac3: Rekristallisationstemperatur (Fig. 3)
- B: Bainit (Fig. 3)
- F: Ferrit (Fig. 3)
- G: verfestigter Bereich in 3
- M: Martensit (Fig. 3)
- Mₛ: Martensitbildungs-Starttemperatur (Fig. 3)
- M_{f}: Martensitbildungs-Endtemperatur
- P: Perlit (Fig. 3)
- T: Tiefe von G in 3
- T1: Abkühlungskurve (schnell, Fig. 3)
- T2: Abkühlungskurve (langsam, Fig. 3)
- X-X: Achse von 3
- Z: innerer Wandstoßpunkt in 3
- µ: Winkel von X-X in 3

## Patentansprüche

1. Verbinderteil (1) zum Verschrauben von Rohren, welches aus einem metallischen Grundkörper (2) mit einem Innenkanal (3) gebildet ist, der mindestens auf einer Seite eine Aufnahmeöffnung (4) mit einem sich nach außen erweiternden Innenkonus (5) aufweist, wobei sich außenseitig auf der mindestens einen Seite des metallischen Grundkörpers (2) ein umfangsgemäß verlaufendes Außengewinde (6) befindet,
**dadurch gekennzeichnet, dass** der metallische Grundkörper (2) aus einem mikrolegierten, ausscheidungsgehärteten, ferritisch-perlitischen Stahl besteht, wobei der ferritisch-perlitische Stahl folgendermaßen zusammengesetzt ist:
| | | |
|---|---|---|
| -0,15 | Masse-% bis 0,50 | Masse-% Kohlenstoff, |
| -0,10 | Masse-% bis 1,00 | Masse-% Silizium, |
| -0,80 | Masse-% bis 1,90 | Masse-% Mangan, |
| - 0,008 | Masse-% bis 0,20 | Masse-% Schwefel, |
| - 0,004 | Masse-% bis 0,04 | Masse-% Stickstoff, |
| -0,05 | Masse-% bis 0,20 | Masse-% Vanadium und/oder Niob, |
| | | |
|---|---|---|
| - Rest Eisen und erschmelzungsbedingte Verunreinigungen, wie Phosphor, wobei der Rest Eisen Anteile von Chrom von weniger als 0,3 Masse-% und/oder von Molybdän von weniger als 0,08 Masseprozent enthalten kann, oder auch von Aluminium im Bereich von 0,02 Masse-% bis 0,04 Masse-%, und gegebenenfalls auch von Titan im Bereich von 0,01 Masse-% bis 0,02 Masse-%. | | |

2. Verbinderteil (1) nach Anspruch 1,
**dadurch gekennzeichnet, dass** der mikrolegierte, ausscheidungsgehärtete, ferritisch-perlitische Stahl einen Perlitanteil im Bereich von 45 Masse-% bis 85 Masse-%, enthält.

3. Verbinderteil (1) nach Anspruch 1 oder 2,
**dadurch gekennzeichnet, dass** das der Kohlenstoffgehalt des mikrolegierten, ausscheidungsgehärteten, ferritisch-perlitischen Stahls im Bereich von 0,27 Masse-% bis 0,42 Masse-% liegt.

4. Verbinderteil (1) nach einem der Ansprüche 1 bis 3,
**dadurch gekennzeichnet, dass** die Korngröße des Ferrits und Perlits des mikrolegierten, ausscheidungsgehärteten, ferritisch-perlitischen Stahls im Bereich von 3,5 bis 6,0 gemäß der Bildreihentafel nach ASTM E 112:2013 liegt.

5. Verbinderteil (1) nach einem der Ansprüche 1 bis 4,
**dadurch gekennzeichnet, dass** der Grundkörper (2) eine im Kern gemessene Vickers-Härte nach DIN EN ISO 6507-1:2006-03 im Bereich von 265 HV10 bis 320 HV10 aufweist.

6. Verbinderteil (1) nach einem der Ansprüche 1 bis 5,
**dadurch gekennzeichnet, dass** der Innenkanal (3) infolge eines Kugelstrahlens mit Glaskugeln eine Oberflächenrauheit Rₐ nach DIN EN ISO 4288:1998-04 im Bereich von 1,0 µm bis 3,0 µm aufweist, wobei die gemittelte Profiltiefe Rz im Bereich von 5 µm bis 35 µm liegt.

7. Verbinderteil (1) nach einem der Ansprüche 1 bis 6,
**dadurch gekennzeichnet, dass** der Innenkanal (3) einen verfestigten Bereich (G), insbesondere einen durch Kugelstrahlen oder Laserbehandlung verfestigten Bereich (G), aufweist, wobei in dem verfestigten Bereich (G) ausgehend von der Oberfläche des Innenkanals (3) bis zu einer Tiefe von 0,5 mm in den Grundkörper (2) hinein Eigenspannungen in Höhe von bis zu 60 Prozent einer Zugfestigkeit des mikrolegierten, ausscheidungsgehärteten, ferritisch-perlitischen Stahls vorliegen.

8. Verbinderteil (1) nach einem der Ansprüche 1 bis 7,
**dadurch gekennzeichnet, dass** der Innenkanal (3) des metallischen Grundkörpers (2) beidseitig jeweils eine Aufnahmeöffnung (4) mit einem sich nach außen erweiternden Innenkonus (5) aufweist, wobei sich außenseitig auf beiden Seiten des metallischen Grundkörpers (2) ein Außengewinde (6) befindet.

9. Verbinderteil (1) nach einem der Ansprüche 1 bis 8,
**gekennzeichnet durch** eine Ausbildung als Winkelverbinder, wobei die Achse (X-X) des Innenkanals (3) von einer gestreckten Form abweicht und insbesondere einen Winkel (µ) von 90° einschließt.

10. Verbinderteil (1) nach Anspruch 7 und 9,
**dadurch gekennzeichnet, dass** der verfestigte Bereich (G) sich über den gesamten Umfang von fluidführenden Bereichen des Innenkanals (3) erstreckt, bevorzugt bis zu einer axialen Tiefe (T), die derjenigen entspricht, wo im Winkelverbinder an einem Wandstoßpunkt (Z) in der Krümmung innen liegende Wandungsteile des Grundkörpers (2) zusammenstoßen.

11. Verfahren zur Herstellung eines Verbinderteils (1) nach einem der Ansprüche 1 bis 10, das aus einem metallischen Grundkörper (2) mit einem Innenkanal (3) gebildet ist, der mindestens auf einer Seite eine Aufnahmeöffnung (4) mit einem sich nach außen erweiternden Innenkonus (5) aufweist, wobei sich außenseitig auf der mindestens einen Seite des metallischen Grundkörpers (2) ein umfangsgemäß verlaufendes Außengewinde (6) befindet, wobei das Verfahren mindestens einen spanabhebenden Bearbeitungsschritt oder mehrere der spanenden Bearbeitungsschritte, wie
- Bohren des Innenkanals,
- Schneiden des Außengewindes,
- spanende Konusherstellung,
zur Herstellung des metallischen Grundkörpers (2) aus einem Rohling umfasst,
**dadurch gekennzeichnet, dass** als Rohling für den metallischen Grundkörper (2) ein mikrolegierter, ausscheidungshärtender, ferritisch-perlitischer Stahl mit einer Zusammensetzung gemäß Anspruch 1 eingesetzt wird, der auf eine Warmumformungstemperatur gebracht und bei dieser Temperatur umgeformt wird, sowie nach einer mit einer Ausscheidungshärtung verbundenen Abkühlung auf Umgebungstemperatur mit einer Abkühlgeschwindigkeit im Bereich von 0,1 K/min bis 20 K/min der spanabhebenden Bearbeitung unterzogen wird.

12. Verfahren nach Anspruch 11,
**dadurch gekennzeichnet, dass** die Abkühlung auf Umgebungstemperatur mit einer Abkühlgeschwindigkeit im Bereich von 1 K/min bis 8 K/min erfolgt.

13. Verfahren nach Anspruch 11 oder 12,
**dadurch gekennzeichnet, dass** die Warmumformung ein Schmiedeprozess, insbesondere ein Gesenk-Schmiedeprozess, ist.

14. Verfahren nach einem der Ansprüche 11 bis 13,
**dadurch gekennzeichnet, dass** die Warmumformungstemperatur im Bereich von 870 °C und 1330 °C, vorzugsweise im Bereich von 950 °C bis 1280 °C, liegt.

15. Verfahren nach einem der Ansprüche 11 bis 14,
**dadurch gekennzeichnet, dass** sich an die Spanabhebung eine Oberflächenverfestigung des Innenkanals (3) durch ein Strahlen oder durch eine Laserbehandlung, anschließt.

16. Verfahren nach Anspruch 15,
**dadurch gekennzeichnet, dass** zum Strahlen Kugeln, insbesondere Glaskugeln, eingesetzt werden.

17. Verfahren nach Anspruch 16,
**dadurch gekennzeichnet, dass** die Kugeln einen Durchmesser im Bereich von 0,005 mm bis 0,7 mm, vorzugsweise im Bereich von 0,02 mm bis 0,3 mm, aufweisen.

18. Verfahren nach Anspruch 16 oder 17,
**dadurch gekennzeichnet, dass** die Kugeln mittels eines Luftstrahls unter einem Druck von weniger als 10 bar, insbesondere unter einem Druck im Bereich 2 bar bis 5 bar, und unter einer Geschwindigkeit im Bereich von 5 m/s bis 40 m/s, vorzugsweise im Bereich 10 m/s bis 25 m/s, gestrahlt werden.

## Claims

1. Connector part (1) for screwing together pipes, which is formed by a metallic main element (2) having an inner channel (3) which on at least one side has an accommodation opening (4) having an inner cone (5) which widens in an outward direction, where a circumferential outer thread (6) is present on the outside of the at least one side of the metallic main element (2),
**characterized in that** the metallic main element (2) consists of a microalloyed, precipitation-hardened, ferritic-pearlitic steel, where the ferritic-pearlitic steel has the following composition:
- from 0.15% by mass to 0.50% by mass of carbon,
- from 0.10% by mass to 1.00% by mass of silicon,
- from 0.80% by mass to 1.90% by mass of manganese,
- from 0.008% by mass to 0.20% by mass of sulfur,
- from 0.004% by mass to 0.04% by mass of nitrogen,
- from 0.05% by mass to 0.20% by mass of vanadium and/or niobium,
- balance iron and melting-related impurities such as phosphorus, where the balance of iron can contain proportions of chromium of less than 0.3% by mass and/or of molybdenum of less than 0.08 per cent by mass or of aluminium in the range from 0.02% by mass to 0.04% by mass and optionally of titanium in the range from 0.01% by mass to 0.02% by mass.

2. Connector part (1) according to Claim 1, **characterized in that** the microalloyed, precipitation-hardened, ferritic-pearlitic steel has a proportion of pearlite in the range from 45% by mass to 85% by mass.

3. Connector part (1) according to Claim 1 or 2, **characterized in that** the carbon content of the microalloyed, precipitation-hardened, ferritic-pearlitic steel is in the range from 0.27% by mass to 0.42% by mass.

4. Connector part (1) according to any of Claims 1 to 3,
**characterized in that** the grain size of the ferrite and pearlite of the microalloyed, precipitation-hardened ferritic-pearlitic steel is in the range from 3.5 to 6.0 according to the picture series chart of ASTM E 112:2013.

5. Connector part (1) according to any of Claims 1 to 4,
**characterized in that** the main element (2) has a Vickers hardness measured in the core in accordance with DIN EN ISO 6507-1:2006-03 in the range from 265 HV10 to 320 HV10.

6. Connector part (1) according to any of Claims 1 to 5,
**characterized in that** the inner channel (3) has a surface roughness Rₐ in accordance with DIN EN ISO 4288:1998-04 in the range from 1.0 µm to 3.0 µm as a result of blasting with glass balls, with the average profile depth R_{z} being in the range from 5 µm to 35 µm.

7. Connector part (1) according to any of Claims 1 to 6,
**characterized in that** the inner channel (3) has a strengthened region (G), in particular a region (G) strengthened by blasting with balls or laser treatment, where residual stresses having a magnitude of up to 60 per cent of a tensile strength of the microalloyed, precipitation-hardened, ferritic-pearlitic steel are present in the strengthened region (G) from the surface of the inner channel (3) to a depth of 0.5 mm into the main element (2).

8. Connector part (1) according to any of Claims 1 to 7,
**characterized in that** the inner channel (3) of the metallic main element (2) has an accommodation opening (4) having an inner cone (5) which widens in an outward direction on each of its two sides, where an outer thread (6) is present on the outside of the two sides of the metallic main element (2).

9. Connector part (1) according to any of Claims 1 to 8,
**characterized by** a configuration as angle connector, where the axis (X-X) of the inner channel (3) deviates from an elongated shape and in particular includes an angle (µ) of 90°.

10. Connector part (1) according to Claim 7 and 9, **characterized in that** the strengthened region (G) extends over the entire circumference of fluid-conducting regions of the inner channel (3), preferably to an axial depth (T) which corresponds to that where, in the angle connector, interior wall parts of the main element (2) abut at a wall abutment point (Z) in the curvature.

11. Process for producing a connector part (1) according to any of Claims 1 to 10, which part is formed by a metallic main element (2) having an inner channel (3) which has, on at least one side, an accommodation opening (4) having an inner cone (5) which widens in an outward direction, where a circumferential outer thread (6) is present on the outside of the at least one side of the metallic main element (2), where the process comprises at least one cutting-machining processing step or a plurality of the cutting-machining processing steps such as
- drilling of the inner channel,
- cutting of the outer thread,
- cutting machining to produce the cone,
for producing the metallic main element (2) from a blank,
**characterized in that** a microalloyed, precipitation-hardening, ferritic-pearlitic steel having a composition according to Claim 1 is used as blank for the metallic main element (2) and is brought to a hot forming temperature and formed at this temperature and, after cooling associated with precipitation hardening to ambient temperature at a cooling rate in the range from 0.1 K/min to 20 K/min, is subjected to the cutting-machining processing.

12. Process according to Claim 11,
**characterized in that** the cooling to ambient temperature is carried out at a cooling rate in the range from 1 K/min to 8 K/min.

13. Process according to Claim 11 or 12,
**characterized in that** the hot forming is a forging process, in particular a die forging process.

14. Process according to any of Claims 11 to 13, **characterized in that** the hot forming temperature is in the range from 870°C to 1330°C, preferably in the range from 950°C to 1280°C.

15. Process according to any of Claims 11 to 14, **characterized in that** the cutting machining is followed by surface strengthening of the inner channel (3) by a blasting treatment or a laser treatment.

16. Process according to Claim 15,
**characterized in that** balls, in particular glass balls, are used for the blasting treatment.

17. Process according to Claim 16,
**characterized in that** the balls have a diameter in the range from 0.005 mm to 0.7 mm, preferably in the range from 0.02 mm to 0.3 mm.

18. Process according to Claim 16 or 17,
**characterized in that** the balls are carried by an air jet under a pressure of less than 10 bar, in particular under a pressure in the range from 2 bar to 5 bar, and at a speed in the range from 5 m/s to 40 m/s, preferably in the range from 10 m/s to 25 m/s.

## Revendications

1. Pièce de raccord (1) destinée au vissage de tubes, laquelle pièce est formée d'un corps de base métallique (2) pourvu d'un conduit intérieur (3) qui comporte au moins sur un côté une ouverture de réception (4) pourvue d'un cône intérieur (5) s'élargissant vers l'extérieur, un filetage extérieur (6) qui s'étend sur la circonférence étant situé du côté extérieur sur l'au moins un côté du corps de base métallique (2), **caractérisée en ce que** le corps de base métallique (2) est en un acier ferrito-perlitique micro-allié durci par précipitation, l'acier ferrito-perlitique comprenant :
- 0,15 % en masse à 0,50 % en masse de carbone,
- 0,10 % en masse à 1,00 % en masse de silicium,
- 0,80 % en masse à 1,90 % en masse de manganèse,
- 0,008 % en masse à 0,20 % en masse de soufre,
- 0,004 % en masse à 0,04 % en masse d'azote,
- 0,05 % en masse à 0,20 % en masse de vanadium et/ou de niobium,
- le reste étant formé par du fer et des impuretés dues au processus de fusion, telles que du phosphore, le reste formé par le fer pouvant contenir des proportions de chrome inférieures à 0,3 % en masse et/ou de molybdène inférieures à 0,08 % en masse, ou d'aluminium dans la gamme de 0,02 % en masse à 0,04 % en masse, et éventuellement également de titane dans la gamme de 0,01 % en masse à 0,02 % en masse.

2. Pièce de raccord (1) selon la revendication 1, **caractérisée en ce que** l'acier ferrito-perlitique micro-allié durci par précipitation a une teneur en perlite dans la gamme allant de 45 % en masse à 85 % en masse.

3. Pièce de raccord (1) selon la revendication 1 ou 2, **caractérisée en ce que** la teneur en carbone de l'acier ferrito-perlitique micro-allié durci par précipitation est dans la gamme allant de 0,27 % en masse à 0,42 % en masse.

4. Pièce de raccord (1) selon l'une des revendications 1 à 3,
**caractérisée en ce que** la granulométrie de la ferrite et de la perlite de l'acier ferrito-perlitique micro-allié durci par précipitation est dans la gamme allant de 3,5 à 6,0 selon la série d'images selon la norme ASTM E 112 : 2013.

5. Pièce de raccord (1) selon l'une des revendications 1 à 4,
**caractérisée en ce que** le corps de base (2) présente une dureté Vickers mesurée à cœur selon la norme DIN EN ISO 6507-1 : 2006-03 dans la gamme allant de 265 HV10 à 320 HV10.

6. Pièce de raccord (1) selon l'une des revendications 1 à 5,
**caractérisée en ce que** le conduit intérieur (3) présente une rugosité de surface Rₐ selon DIN EN ISO 4288: 1998-04 dans la gamme allant de 1,0 µm à 3,0 µm à la suite d'un grenaillage avec des billes de verre, la profondeur de sculpture moyenne R_{z} étant dans la gamme de 5 µm à 35 µm.

7. Pièce de raccord (1) selon l'une des revendications 1 à 6,
**caractérisée en ce que** le conduit intérieur (3) comporte une zone solidifiée (G), notamment une zone (G) solidifiée par grenaillage ou traitement laser, des contraintes internes allant jusqu'à 60 % de la résistance à la traction de l'acier ferrito-perlitique micro-allié durci par précipitation étant présentes dans la zone solidifiée (G) depuis la surface du conduit intérieur (3) jusqu'à une profondeur de 0,5 mm dans le corps de base (2).

8. Pièce de raccord (1) selon l'une des revendications 1 à 7,
**caractérisée en ce que** le conduit intérieur (3) du corps de base métallique (2) comporte des deux côtés une ouverture de réception (4) pourvue d'un cône intérieur (5) s'élargissant vers l'extérieur, un filetage extérieur (6) étant situé du côté extérieur des deux côtés du corps de base métallique (2).

9. Pièce de raccord (1) selon l'une des revendications 1 à 8, **caractérisée par** une conception en raccord d'angle, l'axe (X-X) du conduit intérieur (3) s'écartant d'une forme allongée et formant notamment un angle (µ) de 90°.

10. Pièce de raccord (1) selon les revendications 7 et 9,
**caractérisée en ce que** la zone solidifiée (G) s'étend sur toute la circonférence de zones de transport de fluide du conduit intérieur (3), de préférence jusqu'à une profondeur axiale (T) qui correspond à celle où des parties de paroi intérieure du corps de base (2) s'aboutent dans le raccord d'angle au niveau d'un point d'aboutement de paroi (Z) dans la courbure.

11. Procédé de fabrication d'une pièce de raccord (1) selon l'une des revendications 1 à 10, qui est formée d'un corps de base métallique (2) pourvu d'un conduit intérieur (3) qui comporte au moins sur un côté une ouverture de réception (4) pourvue d'un cône intérieur (5) s'élargissant vers l'extérieur, un filetage extérieur (6) qui s'étend circonférentiellement étant situé du côté extérieur sur au moins un côté du corps de base métallique (2), le procédé comportant au moins une étape d'usinage par enlèvement de copeaux ou plusieurs des étapes d'usinage, telles que
- perçage du conduit intérieur,
- coupe du filetage extérieur,
- réalisation du cône par enlèvement de copeaux, pour la réalisation du corps de base métallique (2) à partir d'une ébauche,
**caractérisé en ce qu'**un acier ferritico-perlitique micro-allié durci par précipitation avec une composition selon la revendication 1 est utilisé comme ébauche pour le corps de base métallique (2), lequel acier est porté à une température de formage à chaud et est mis en forme à cette température, et est soumis à l'usinage par enlèvement de copeaux après refroidissement, associé à un durcissement par précipitation, à la température ambiante à une vitesse de refroidissement dans la gamme allant de 0,1 K/min à 20 K/min.

12. Procédé selon la revendication 11,
**caractérisé en ce que** le refroidissement à température ambiante est effectué à une vitesse de refroidissement dans la gamme allant de 1 K/min à 8 K/min.

13. Procédé selon la revendication 11 ou 12, **caractérisé en ce que** le formage à chaud est un procédé de forgeage, notamment un procédé de forgeage par estampage.

14. Procédé selon l'une des revendications 11 à 13, **caractérisé en ce que** la température de formage à chaud est dans la gamme allant de 870 °C à 1330 °C, de préférence de 950 °C à 1280 °C.

15. Procédé selon l'une des revendications 11 à 14, **caractérisé en ce que** l'enlèvement des copeaux est suivi d'un renforcement superficiel du conduit intérieur (3) par grenaillage ou par traitement laser.

16. Procédé selon la revendication 15,
**caractérisé en ce que** des billes, en particulier des billes de verre, sont utilisées pour le grenaillage.

17. Procédé selon la revendication 16,
**caractérisé en ce que** les billes ont un diamètre dans la gamme allant de 0,005 mm à 0,7 mm, de préférence dans la gamme allant de 0,02 mm à 0,3 mm.

18. Procédé selon la revendication 16 ou 17, **caractérisé en ce que** le grenaillage avec les billes est effectué au moyen d'un jet d'air sous une pression inférieure à 10 bar, notamment sous une pression dans la gamme allant de 2 bar à 5 bar, et à une vitesse dans la gamme allant de 5 m/s à 40 m/s, de préférence dans la gamme allant de 10 m/s à 25 m/s.
